# EUROPÄISCHE PATENTSCHRIFT

(11) **EP 4 314 964 B1**
(45) Veröffentlichungstag und Bekanntmachung des Hinweises auf die Patenterteilung: **19.02.2025**
(21) Anmeldenummer: 22719810.8
(22) Anmeldetag: 28.03.2022
(51) Int. Cl.: G05B 19/048

(54) **STEUERVORRICHTUNG MIT EINER ÜBERWACHUNGSEINRICHTUNG**
CONTROL DEVICE HAVING A MONITORING UNIT
SYSTÈME DE COMMANDE DOTÉ D'UN DISPOSITIF DE SURVEILLANCE

(30) Priorität: 30.03.2021 DE 102021108012
(43) Veröffentlichungstag der Anmeldung: 07.02.2024
(73) Patentinhaber: KUKA Deutschland GmbH, 86165 Augsburg (DE)
(72) Erfinder: KOGAN, Yevgen, 86152 Augsburg (DE)
(74) Vertreter: Oelke, Jochen
(86) Internationale Anmeldenummer: PCT/EP2022/058132
(87) Internationale Veröffentlichungsnummer: WO 2022/207557

(56) Entgegenhaltungen:
- DE-A1- 102017 108 316
- DE-B3- 102015 206 578
- DE-B3- 102016 208 811

## Beschreibung

Die Erfindung betrifft eine Steuervorrichtung zum Steuern einer Maschine oder Anlage, die eine erste Steuereinrichtung aufweist, welche in nicht sicherer Technik ausgebildet ist und eingerichtet ist zum Ansteuern wenigstens einer nicht sicherheitsrelevanten Funktion der Maschine oder Anlage, und eine zweite Steuereinrichtung aufweist, welche in sicherer Technik ausgebildet ist und eingerichtet ist zum Ansteuern wenigstens einer sicherheitsrelevanten Funktion der Maschine oder Anlage, wobei die zweite Steuereinrichtung mit wenigstens einem der zweiten Steuereinrichtung zugeordneten Eingabemittel in sicherer Technik verbunden ist, das ausgebildet ist zum manuellen Betätigen, um die sicherheitsrelevante Funktion auszulösen.

Die DE 10 2015 206 571 B3 beschreibt ein Roboter-Bedienhandgerät, aufweisend eine Sicherheits-Grundsteuervorrichtung, ein mobiles Endgerät und einen Halter, der ausgebildet ist, das mobile Endgerät an der Sicherheits-Grundsteuervorrichtung zu befestigen, wobei der Halter wenigstens eine Adaptervorrichtung aufweist, die ausgebildet ist, das mobile Endgerät mit der Sicherheits-Grundsteuervorrichtung mechanisch zu verbinden, wobei die Sicherheits-Grundsteuervorrichtung ein erstes Bedienhandgeräteteil aufweist und wenigstens ein bezüglich des ersten Bedienhandgeräteteils verstellbares zweites Bedienhandgeräteteil aufweist, wobei die Bedienhandgeräteteile derart verstellbar miteinander gekoppelt sind, dass die Bedienhandgeräteteile in einer Grundanordnung ein konturreduziertes Roboter-Bedienhandgerät bilden und in einer konturerweiterten Aufnahmeanordnung, in der das zweite Bedienhandgeräteteil von dem ersten Bedienhandgeräteteil aus der Grundanordnung verstellt angeordnet ist, das Roboter-Bedienhandgerät zur Aufnahme des mobilen Endgeräts durch die Adaptervorrichtung ausgestaltet ist.

Die DE 10 2017 108316 A1 betrifft ein Verfahren zum Bedienen einer Maschine mit einem ersten Handbediengerät zur nichtsicherheitsgerichteten Maschinensteuerung und ein zweites Handbediengerät zur sicherheitsgerichteten Maschinensteuerung, wobei beide Handbediengeräte Steuersignale austauschen können.

Die DE 10 2016 208811 B3 betrifft eine mobile Sicherheits-Grundsteuervorrichtung mit einer Kodiervorrichtung für ein mobiles Endgerät mit einem Multi-Touchscreen. Hierzu weist die Vorrichtung ein Gehäuse mit einem Halter auf, welches an ein mobiles Endgerät angebracht werden kann. Die Vorrichtung weist ferner eine Kodiervorrichtung auf, mit welcher die an dem Bediengerät angesteckte Vorrichtung einen diese identifizierenden Code automatisch über den Touchscreen an die Endgeräte Steuerung übermitteln kann.

Aufgabe der Erfindung ist es, eine Steuervorrichtung zum Steuern einer Maschine oder Anlage zu schaffen, durch welche die Bedieneigenschaften zum Ansteuern der Maschine oder Anlage erweitert sind.

Die Aufgabe wird gelöst durch eine Steuervorrichtung zum Steuern einer Maschine oder Anlage, aufweisend:
- eine erste Steuereinrichtung, welche in nicht sicherer Technik ausgebildet ist und eingerichtet ist zum Ansteuern wenigstens einer nicht sicherheitsrelevanten Funktion der Maschine oder Anlage,
- eine zweite Steuereinrichtung, welche in sicherer Technik ausgebildet ist und eingerichtet ist zum Ansteuern wenigstens einer sicherheitsrelevanten Funktion der Maschine oder Anlage, wobei die zweite Steuereinrichtung mit wenigstens einem der zweiten Steuereinrichtung zugeordneten zweiten Eingabemittel in sicherer Technik verbunden ist, das ausgebildet ist zum manuellen Betätigen, um die sicherheitsrelevante Funktion auszulösen, gekennzeichnet durch
- eine Überwachungseinrichtung, die ausgebildet und eingerichtet ist, die zweite Steuereinrichtung auf ihren Funktionszustand zu überwachen, derart, dass die Überwachungseinrichtung in einem aktivierten Funktionszustand der zweiten Steuereinrichtung, durch den die Maschine oder Anlage in einen sicheren Zustand überführt wird, das wenigstens eine der zweiten Steuereinrichtung zugeordnete zweiten Eingabemittel mit der ersten Steuereinrichtung verbindet, derart, dass durch manuelles Betätigen des wenigstens einen zweiten Eingabemittels nicht sicherheitsrelevante Funktionen der Maschine oder Anlage ausgelöst werden können, solange die zweite Steuereinrichtung sich in ihrem aktivierten Funktionszustand befindet, in dem das wenigstens eine zweite Eingabemittel nicht als bestimmungsgemäßes Sicherheitsschaltmittel an die Maschine oder Anlage angeschlossen ist.

In einer konkreten Ausführungsform kann die zweite Steuereinrichtung wenigstens ein zweites Eingabemittel als Eingabemittel umfassen, wobei die erste Steuereinrichtung wenigstens ein erstes Eingabemittel umfasst. Alternativ oder ergänzend kann die zweite Steuereinrichtung mit einem Not-Halt-Schaltmittel verbunden sein. Demgemäß kann das wenigstens eine zweite Schaltmittel ein Not-Halt-Schaltmittel sein. Alternativ oder ergänzend zu einem ein Not-Halt-Schaltmittel kann das zweite Schaltmittel aber beispielsweise auch ein von der zweiten Steuervorrichtung separat angeordnetes Überwachungsmittel oder Sensormittel, wie beispielsweise ein Sicherheits-Laserscanner sein.

Für jedes Eingabemittel oder Schaltmittel, insbesondere zweites Eingabemittel kann angezeigt werden, beispielsweise durch ein Leuchtmittel, wie eine gelbe oder rote LED, in räumlicher Nähe oder unmittelbar an dem jeweiligen Eingabemittel, ob sich das Eingabemittel, welches mit der ersten Steuereinrichtung oder der zweiten Steuereinrichtung verbunden ist, in der jeweiligen Verbindungsweise in seinem funktionsfähigen Betriebszustand befindet, in seinem nicht-funktionsfähigen Betriebszustand befindet, und/oder in sicherer Funktionsweise, d.h. in sicherer Technik, mit der zweiten Steuereinrichtung verbunden ist oder in nicht sicherer Funktionsweise, d.h. in sicherer Technik, mit der ersten Steuereinrichtung verbunden ist.

Die Aufgabe wird daher in einer konkreten Ausführungsform insbesondere gelöst durch eine Steuervorrichtung zum Steuern einer Maschine oder Anlage, aufweisend:
- eine erste Steuereinrichtung, welche in nicht sicherer Technik ausgebildet ist und eingerichtet ist zum Ansteuern wenigstens einer nicht sicherheitsrelevanten Funktion der Maschine oder Anlage, wobei die erste Steuereinrichtung mit wenigstens einem ersten Eingabemittel verbunden ist, das ausgebildet ist zum manuellen Betätigen, um die nicht sicherheitsrelevante Funktion auszulösen,
- eine zweite Steuereinrichtung, welche in sicherer Technik ausgebildet ist und eingerichtet ist zum Ansteuern wenigstens einer sicherheitsrelevanten Funktion der Maschine oder Anlage, wobei die zweite Steuereinrichtung mit wenigstens einem zweiten Eingabemittel in sicherer Technik verbunden ist, das ausgebildet ist zum manuellen Betätigen, um die sicherheitsrelevante Funktion auszulösen, wobei das wenigstens eine zweite Eingabemittel zumindest ein Not-Halt-Schaltmittel umfasst, gekennzeichnet durch
- eine Überwachungseinrichtung, die ausgebildet und eingerichtet ist, das Not-Halt-Schaltmittel auf seinen Funktionszustand zu überwachen, derart, dass die Überwachungseinrichtung in einem aktivierten Funktionszustand des Not-Halt-Schaltmittels, durch den die Maschine oder Anlage in einen sicheren Zustand überführt wird, das wenigstens eine zweite Eingabemittel mit der ersten Steuereinrichtung verbindet, derart, dass durch manuelles Betätigen des wenigstens einen zweiten Eingabemittels nicht sicherheitsrelevante Funktionen der Maschine oder Anlage ausgelöst werden können, solange das Not-Halt-Schaltmittel sich in seinem nicht-funktionsfähigen Betriebszustand befindet, in dem es nicht als bestimmungsgemäßes Sicherheitsschaltmittel an eine Maschine oder Anlage angeschlossen ist.

Die Steuervorrichtung zum Steuern der Maschine oder Anlage kann in einem einzigen Steuergerät zusammengefasst sein. Alternativ kann die Steuervorrichtung über mehrere Geräte oder Steuergehäuse hinweg verteilt ausgebildet sein. Die Steuervorrichtung kann insbesondere aus mehreren Steuereinrichtungen besehen, die zu einem gemeinsamen Steuersystem verbunden sind. Ein Verbinden mehrerer Steuereinrichtungen kann insbesondere bedeuteten, dass verschiedene Steuereinheiten über elektrische Verbindungen gekoppelt sind, so dass eine Steuereinrichtung mit einer jeweils anderen Steuereinrichtung kommunizieren kann, insbesondere Daten und/oder Signale senden und/oder empfangen, insbesondere austauschen kann. Die Steuervorrichtung kann außerdem eine lokale Steuereinheit umfassen, welche ortsfest angeordnet sein kann und außerdem eine tragbare Steuereinheit umfassen, welche portabel bzw. mobil ist, und insbesondere von einer Person von einem Ort zu einem anderen Ort getragen werden kann. Je nach individueller Ausführungsform können einzelne logische Steuerkomponenten wahlweise in einer lokalen Steuereinheit oder in einer portablen Steuereinheit ausgebildet sein. Verschiedene Steuereinheiten können dabei entweder drahtgebunden oder drahtlos, insbesondere über eine Funkverbindung miteinander kommunizieren.

Die zweite Steuereinrichtung, welche in sicherer Technik ausgebildet ist, ist ein sicherheitsbezogenes Steuersystem, welches die jeweils einschlägigen Sicherheitsnormen erfüllt. Die einschlägigen Sicherheitsnormen können insbesondere die ISO 13849-1 und die IEC 62061-1 sein. Bei speziellen Maschinen und Anlagen, welche Roboter umfassen, kann außerdem die ISO 10218-1 heranzuziehen sein. Die zweite Steuereinrichtung ist insbesondere dann in sicherer Technik ausgebildet, wenn funktionskritische Komponenten redundant oder sogar diversitär vorhanden sind. Die zweite Steuereinrichtung, die in sicherer Technik ausgebildet ist, ist insbesondere eingerichtet zum Abfragen wenigstens eines Schaltzustandes eines Not-Halt-Schaltmittels, eines Betriebsarten-Wahlschalters und/oder wenigstens einer Zustimmtaste, welches jeweils eines der zweiten Eingabemittel sein kann.

Das Not-Halt-Schaltmittel ist das wesentliche Schaltelement eines elektrischen Not-Halt-Geräts bzw. einer Not-Halt-Einrichtung oder eines Notausschalters. Dieses umfasst im Allgemeinen einen manuell zu betätigenden elektrischen Schalter, der dafür dient, in einem Gefahrenfall bei Betätigung durch eine Person eine dem Not-Halt-Schaltmittel zugeordnete Maschine oder Anlage in einen sicheren Zustand versetzen zu können. Dazu wird das Not-Halt-Schaltmittel an eine elektrische Steuervorrichtung, d.h. die zweite Steuereinheit, angeschlossen, welche die Schaltzustände des Not-Halt-Geräts erfasst und in dessen Abhängigkeit eine Nothalt-Funktionalität auslöst, welche die Maschine oder die Anlage in einen sicheren Zustand bringt. In Abhängigkeit der Art und Betriebsweise der Maschine oder Anlage können unterschiedliche Nothalt-Funktionalitäten ausgelöst werden.

Sicherheitsfunktionen von elektrischen Antrieben sind beispielsweise in EN / IEC 61800-5-2 definiert und umfassen mehrere Arten von sicherem Betriebshalt, wie insbesondere STO (Safe torque off), SS1 (Safe stop 1) und SS2 (Safe stop 2).

Sicherheitshaltfunktionen von Maschinen allgemein sind beispielsweise in EN / IEC 60204-1 definiert und werden dort beispielsweise als Stoppkategorie 0, Stoppkategorie 1 und Stoppkategorie 2 bezeichnet.

Mittels des elektrischen Not-Halt-Schaltmittels können somit Not-Halt-Funktionen einer Maschine oder einer Anlage beispielsweise gemäß EN / IEC 61800-5-2 oder EN / IEC 60204-1 ausgelöst werden. Dazu kann die betreffende Maschine oder die betreffende Anlage eine Sicherheitssteuervorrichtung aufweisen bzw. mit einer solchen Sicherheitssteuervorrichtung verbunden sein, welche ihrerseits mit dem entsprechenden elektrischen Not-Halt-Gerät verbunden ist.

Ein konkretes Beispiel von Maschinen, die entsprechende Sicherheitsanforderungen zu erfüllen haben, sind Industrieroboter, die gemäß DIN EN ISO 10218-1 mit einer Not-Halt-Einrichtung gemäß EN / IEC 60204-1 und DIN EN ISO 13850 ausgestattet sein müssen.

Der Zustimmtaster ist im Allgemeinen ein dreistufiger Schalter, der drei verschiedene Schaltstellungen aufweisen kann. In einer mittleren Schaltstellung sind Schaltkontakte des Zustimmtasters elektrisch geschlossen, was einem Schaltzustand des Zustimmtasters entspricht, bei dem die Maschine oder Anlage in Betrieb gesetzt werden kann bzw. in Betrieb ist. Die mittlere Schaltstellung ist eine instabile Schaltstellung, d.h. der Zustimmtaster weist diese Schaltstellung nur dann auf, wenn eine Person, beispielsweise mit der Hand oder wenigstens einem Finger den Zustimmtaster gedrückt hält. Wird der Zustimmtaster hingegen losgelassen, dann wechselt der Zustimmtaster selbsttätig in seine losgelassene Schaltstellung, in welcher die elektrischen Schaltkontakte geöffnet sind. In einem geöffneten Schaltzustand wird die Maschine oder die Anlage sofort automatisch in einen sicheren Zustand überführt. In der dritten Schaltstellung des Zustimmtasters ist dessen Betätigungselement durchgedrückt, d.h. der Zustimmtaster befindet sich dann in seiner durchgedrückten Schaltstellung. Dies bedeutet, dass der Zustimmtaster in seiner durchgedrückten Schaltstellung mit einer größeren Kraft betätigt ist, als derjenigen Kraft, die zum Betätigen des Zustimmtasters in seiner mittleren Schaltstellung erforderlich ist. Diese dritte Schaltstellung stellt sicher, dass in einem Gefahrenfall, in dem ein Bediener der Maschine oder Anlage in Panik gerät und den Zustimmtaster nicht loslässt, sondern aufgrund eines menschlichen Reflexes noch kräftiger drückt, als es zur Inbetriebsetzung der Maschine oder Anlage erforderlich ist, wenn der Zustimmtaster in seiner mittleren Schaltstellung gehalten werden soll, die ja eine instabile Schaltstellung ist. Der Zustimmtaster kann insoweit gemäß IEC 60947-5 ausgeführt sein. Der Zustimmtaster ist nach gültigen Vorschriften in sicherer Technik auszuführen.

Der Betriebsarten-Wahlschalter kann beispielsweise ein mehrstufiger Drehknebel und/oder ein Schlüsselschalter sein, der wahlweise in eine von mehreren Schaltstellungen bewegt werden kann, wobei jeder individuellen Schaltstellung des Betriebsarten-Wahlschalters eine vorbestimmte, eigene sicherheitsrelevante Funktionalität zugeordnet ist. Beispielsweise bei Robotern kann über den Betriebsarten-Wahlschalter zwischen einem Automatikbetrieb, einem ersten Tippbetrieb und einem zweiten Tippbetrieb umgeschaltet werden. Ein solcher Betriebsarten-Wahlschalter ist nach gültigen Vorschriften in sicherer Technik auszuführen.

Weitere zweite Eingabemittel können nicht nur manuell zu betätigende Handtaster oder Handschalter sein, sondern gegebenenfalls auch Fußmatten, Türstellungssensoren oder Laserscanner, beispielsweise für einen Eingriffsschutz, beispielsweise an hydraulischen Pressen, welche jeweils bestimmte Zustände an der Maschine oder der Anlage in sicherer Technik überwachen.

Die erste Steuereinrichtung, welche in nicht sicherer Technik ausgebildet ist, stellt ein allgemeines Steuersystem dar, welches lediglich nach allgemeinen Regeln der Technik ausgeführt ist und insbesondere nicht die Anforderungen erfüllte, welche die jeweils einschlägigen Sicherheitsnormen vorschreiben. Die einschlägigen Sicherheitsnormen können insbesondere die ISO 13849-1 und die IEC 62061-1 sein. Bei speziellen Maschinen und Anlagen, welche Roboter umfassen, kann außerdem die ISO 10218-1 heranzuziehen sein. Die erste Steuereinrichtung ist insbesondere dann in nicht sicherer Technik ausgebildet, wenn funktionskritische Komponenten weder redundant noch diversitär vorhanden sind.

Indem die Steuervorrichtung insbesondere eine Überwachungseinrichtung aufweist, die ausgebildet und eingerichtet ist, das Not-Halt-Schaltmittel auf seinen Funktionszustand zu überwachen, derart, dass die Überwachungseinrichtung in einem aktivierten Funktionszustand des Not-Halt-Schaltmittels, durch den die Maschine oder Anlage in einen sicheren Zustand überführt wird, das wenigstens eine zweite Eingabemittel mit der ersten Steuereinrichtung verbindet, derart, dass durch manuelles Betätigen des zweiten Eingabemittels nicht sicherheitsrelevante Funktionen der Maschine oder Anlage ausgelöst werden können, solange die zweite Steuereinrichtung, insbesondere das Not-Halt-Schaltmittel sich im nicht-funktionsfähigen Betriebszustand befindet, in dem das Eingabemittel nicht als bestimmungsgemäßes Sicherheitsschaltmittel an eine Maschine oder Anlage angeschlossen ist, wird eine Steuervorrichtung zum Steuern einer Maschine oder Anlage geschaffen, durch welche die Bedieneigenschaften zum Ansteuern der Maschine oder Anlage erweitert sind.

Die Überwachungseinrichtung kann Teil der zweiten Steuereinrichtung sein oder eine von der zweiten Steuereinrichtung und/oder der ersten Steuereinrichtung separate Steuereinheit sein.

Das Not-Halt-Schaltmittel weist, unabhängig davon, ob es bereits an die zweite Steuereinrichtung angeschlossen ist oder nicht angeschlossen ist, in einer unbetätigten ersten Betriebsstellung seines Not-Halt-Bedienteils einen den nicht aktivierten Funktionszustand des Not-Halt-Schaltmittels kennzeichnenden ersten Schaltzustand auf und in einer betätigten zweiten Betriebsstellung seines Not-Halt-Bedienteils einen den aktivierten Funktionszustand des Not-Halt-Schaltmittels kennzeichnenden zweiten Schaltzustand auf. Das Not-Halt-Schaltmittel kann beispielsweise elektrische Schaltkontakte aufweisen, die beispielsweise im ersten Schaltzustand geöffnet sind, so dass das Not-Halt-Schaltmittel einen Schaltkreis unterbricht und die im zweiten Schaltzustand geschlossen sind, so dass das Not-Halt-Schaltmittel einen Schaltkreis schließt.

Der funktionsfähige Betriebszustand des Not-Halt-Schaltmittels kennzeichnet sich insbesondere dadurch, dass bei einer Betätigung des Not-Halt-Bedienteils, also bei Einleitung des aktivierten Funktionszustands des Not-Halt-Schaltmittels, die dem Not-Halt-Schaltmittel zugeordnete Maschine oder Anlage den gewünschten bzw. den geforderten Betriebshalt oder Not-Halt ausführt, gegebenenfalls angesteuert durch die zweite Steuereinrichtung.

Wenn jedoch im funktionsfähigen Betriebszustand des Not-Halt-Schaltmittels ein Not-Halt bereits ausgelöst wurde, d.h. das Not-Halt-Schaltmittel sich im aktivierten Funktionszustand befindet, befindet sich die Maschine oder die Anlage in einem sicheren Zustand, d.h. die Maschine oder Anlage kann nicht mehr durch einfache Eingaben in Betrieb gesetzt werden, ohne nicht auch das Not-Halt-Schaltmittel wieder in seinen nicht aktivierten Funktionszustand zu versetzten. Wenn jedoch das Not-Halt-Schaltmittel bereits im aktivierten Funktionszustand ist und die Maschine oder die Anlage sich in einem sicheren Zustand befindet, sind die gegebenenfalls vorhandenen weiteren zweiten Schaltmittel (und auch das Not-Halt-Schaltmittel selbst) nicht mehr im eigentlich bestimmungsgemäßen Gebrauch. Deshalb können gemäß der erfindungsgemäßen technischen Lösung diese zweiten Schaltmittel zu anderen Zwecken genutzt werden. Diese zweite und insoweit neue Nutzung kann insbesondere eine Nutzung sein, die nicht notwendiger Weise in sicherer Technik ausgeführt sein muss. Die zweiten Schaltmittel, die im sicheren Halt der Maschine oder Anlage insoweit ihre bisherige Sicherheitsfunktion verloren haben, können erfindungsgemäß nun genutzt werden, um andere Funktionen, insbesondere nicht in sicherer Technik ausgebildete Funktionen, die vorab vordefiniert und/oder programmiert bzw. ausgewählt sein können, zu steuern. Dies wird im Folgenden anhand des Beispiels eines Zustimmtasters anschaulich beschrieben. Die in diesem Zusammenhang beschriebenen technischen Lösungen sind jedoch in ihrem funktionellen Gehalt auch auf andere zweite Eingabemittel in analoger Weise anwendbar.

Da bei aktiviertem Not-Halt-Schaltmittel die zugeordnete Maschine oder Anlage sich in einem sicheren Zustand befindet, d.h. sich im Not-Halt-Zustand befindet, ist die ursprüngliche Funktionalität des Zustimmtasters im Sinne von IEC 60947-5 nicht mehr gegeben. Wenn nun ein Maschinenbediener, wie beispielsweise ein Programmierer eines Roboters Veränderungen an einem Roboterprogramm durchführen möchte, beispielsweise wenn fehlerhaft programmierte Fahrbewegungen für den Roboter programmiert worden sind, möchte er gegebenenfalls Text in Befehlszeilen des Roboterprogramms editieren. Dazu ist es üblich, dass er zwischen den Zeilen des Roboterprogramms wechseln möchte, um eine bestimmte Programmzeile zu aktivieren und diese zu editieren, d.h. textlich zu ändern. Es kann nun beispielsweise vorgesehen sein, dass die erste Steuereinrichtung derart eingerichtet ist, dass durch manuelles Drücken des Zustimmtasters ein Cursor in den Zeilen des Roboterprogramms in die nächsthöhere Programmzeile springt. Dies ist dann eine für den Zustimmtaster neue Funktionalität, welche keine sicherheitsrelevante Funktion ist, also nicht in sicherer Technik ausgestaltet sein muss. Diese neue Funktionalität kann steuerungstechnisch vorbestimmt, d.h. einprogrammiert sein. Alternativ kann diese neue Funktionalität beispielsweise vom Benutzer bzw. vom Programmierer selbst belegt oder aus einer Anzahl von mehreren vorgegebenen, möglichen Funktionalitäten ausgewählt sein. Es kann des Weiteren beispielsweise vorgesehen sein, dass die erste Steuereinrichtung zusätzlich derart eingerichtet ist, dass durch manuelles Durchdrücken des Zustimmtasters der Cursor in den Zeilen des Roboterprogramms in die nächstniedrigere Programmzeile springt. Dies ist dann eine für den Zustimmtaster zusätzliche zweite neue Funktionalität, welche keine sicherheitsrelevante Funktion ist, also nicht in sicherer Technik ausgestaltet sein muss. Diese zusätzliche zweite neue Funktionalität kann steuerungstechnisch vorbestimmt, d.h. einprogrammiert sein. Alternativ kann diese zusätzliche zweite neue Funktionalität beispielsweise vom Benutzer bzw. vom Programmierer selbst belegt oder aus einer Anzahl von mehreren vorgegebenen, möglichen Funktionalitäten ausgewählt sein. Eine alternative Funktionalität kann beispielsweise ein Befehl zum Bestätigen einer Eingabe sein, die im allgemeinen computertechnischen Umfeld als ein "select" oder "return" bzw. "Eingabe" bezeichnet wird. Das Springen zwischen Programmzeilen kann im Sinne des allgemeinen computertechnischen Umfeldes als ein "next"-Befehl verstanden werden. So sind außer dem konkreten Beispiel des Springens zwischen Programmzeilen dem Fachmann eine Vielzahl von anderen programmiertechnischen Funktionalitäten bekannt, die in diesem Sinne angewandt werden können, um dem zweiten Eingabemittel eine nicht sicherheitsrelevante Funktion zuzuordnen, solange das Not-Halt-Schaltmittel sich weiterhin in seinem nicht-funktionsfähigen Betriebszustand befindet, d.h. die Maschine oder Anlage nicht in Betrieb ist.

Generell kann jedoch mit einem neubelegten, zweiten Eingabemittel ein beliebiges Durchsuchen von mehreren Objekten mit anschließendem Selektieren eines bestimmten Objekts im Sinne der objektorientierten Programmierung erfolgen. Dabei kann das Objekt in seiner programmtechnischen Repräsentation wahlweise ein virtuelles Objekt, beispielsweise ein Element einer Liste sein oder einem realen Objekt, wie beispielsweise einer Maschine, insbesondere einem Roboter zugeordnet sein.

Ein anderes Beispiel ist eine Fallgestaltung, bei welcher innerhalb einer Anlage, die mehrere Maschinen, insbesondere Roboter umfasst, ein tragbares Bedienhandgerät von einer Person gesteuert wird, welches Bedienhandgerät wahlweise einer bestimmten Maschine oder einem bestimmten Roboter zugeordnet werden kann. Ist die Maschine oder der Roboter, welcher bisher mit dem Bedienhandgerät sicherheitssteuerungstechnisch verbunden war durch das Aktivieren eines Not-Halt-Schaltmittels des tragbaren Bedienhandgeräts in einen sicheren Zustand gebracht, kann eines der zweiten Eingabemittel des tragbaren Bedienhandgeräts, beispielsweise dessen Zustimmtaster, genutzt werden, um das tragbare Bedienhandgerät durch eine manuelle Eingabe an diesem zu einer anderen Maschine oder einem anderen Roboter der Anlage zu wechseln, d.h. es steuerungstechnisch anzustoßen, dass sich das tragbare Bedienhandgerät, nach dem Not-Halt der einen Maschine oder des einen Roboters mit einer der anderen Maschinen oder einem der anderen Roboter steuerungstechnisch verbindet. Hierbei kann beispielsweise durch wiederholtes Drücken (kein Durchdrücken) des Zustimmtasters der Reihe nach von einer Maschine zu einer nächsten Maschine gesprungen werden bzw. von einem Roboter zu einem nächsten Roboter gesprungen werden. Ist die angesprungene Maschine oder der angesprungene Roboter, der mit dem Bedienhandgerät steuerungstechnisch verbunden werden soll, kann beispielsweise durch Durchdrücken (nicht bloßes Drücken) desselben Zustimmtasters genau diese Maschine oder genau dieser Roboter selektiert bzw. aktiviert werden, d.h. das Bedienhandgerät tatsächlich mit dieser Maschine oder diesem Roboter steuerungstechnisch verbunden werden.

Nachdem die Handlungen, für welche die Funktionalität des umgewidmeten zweiten Eingabemittels abgeschlossen sind, kann die Überwachungseinrichtung die umgewidmete Funktionalität von dem zweiten Eingabemittel wieder entfernen bzw. wegnehmen, so dass das betreffende zweite Eingabemittel seine ursprüngliche sicherheitsgerichtete Funktionalität wieder zurückerhält.

Ein somit erfindungsgemäßes Umwidmen der Funktionalität eines an sich sicherheitsgerichteten zweiten Eingabemittels in ein allgemeines, insbesondere nicht sicherheitsgerichtetes Eingabemittel, kann insbesondere dann zweckmäßig sein, wenn die betreffende Eingabevorrichtung bzw. das betreffende Bedienhandgerät nur über wenige verschiedene Eingabemittel verfügt, wie dies insbesondere bei einem eingangs erwähnten Roboter-Bedienhandgerät der Fall ist, wie er beispielsweise in DE 10 2015 206 571 B3 beschrieben ist.

Die Überwachungseinrichtung kann eingerichtet sein, ein Signal an die erste Steuereinrichtung zu senden, wenn die zweite Steuereinrichtung, insbesondere das Not-Halt-Schaltmittel sich in seinem aktivierten Funktionszustand befindet, wobei die erste Steuereinrichtung aufgrund des von der Überwachungseinrichtung erhaltenen Signals, dem wenigstens einen zweiten Eingabemittel eine vorbestimmte Funktion zuordnet, derart, dass bei manuellem Betätigen des wenigstens einen zweiten Eingabemittels die zugeordnete Funktion ausgeführt wird.

Die Überwachungseinrichtung veranlasst insoweit im Falle des aktivierten Funktionszustands der zweiten Steuereinrichtung, insbesondere des Not-Halt-Schaltmittels, d.h. im stillgesetzten Zustand der Maschine oder Anlage, dass dem zweiten Eingabemittel, das bisher einer bestimmten sicherheitsrelevanten Funktion zugeordnet war, eine andere Funktion zuordnet wird, und zwar insbesondere eine nicht sicherheitsrelevante Funktion zugeordnet wird. Es kann vorgesehen sein, dass lediglich einem einzigen zweiten Eingabemittel eine nicht sicherheitsrelevante Funktion, d.h**.** insoweit eine neue Funktion zugordnet wird. Es kann aber auch vorgesehen sein, dass zwei oder mehreren zweiten Eingabemitteln jeweils eine nicht sicherheitsrelevante Funktion, d.h. insoweit eine neue Funktion zugordnet wird. Dazu können ein oder mehrere nicht sicherheitsrelevante Funktionsarten vorgegeben sein, aus denen entweder manuell ausgewählt werden kann, aus denen programmgesteuert eine vorselektierte, nicht sicherheitsrelevante Funktionsart automatisch aktiviert wird, oder eine fest gespeicherte nicht sicherheitsrelevante Funktionsart automatisch aktiviert wird. Die nicht sicherheitsrelevante Funktionsart kann insoweit einen weitgehend beliebigen Steuerbefehl oder mehrere Steuerbefehle umfassen, die von der ersten Steuereinrichtung interpretiert, d.h. erkannt und ausgeführt werden können.

Die nicht sicherheitsrelevanten Funktionsarten können beispielsweise programmtechnische Befehle sein bzw. diese umfassen. Dies kann beispielsweise ein Sprungbefehlt, in Art eines programmtechnischen "next"-Befehls sein oder ein Ausführungsbefehl, in Art eines programmtechnischen "select"-Befehls, "enter"-Befehls oder "execute"-Befehls sein. Im Sinne eines "next"-Befehls kann beispielsweise durch den Sprungbefehl von einem ersten Menü einer grafischen Bedienoberfläche eines Bedienhandgeräts in ein anderes zweites Menü gewechselt werden. Im Sinne eines Sprungbefehls kann auch innerhalb eines Menüs der grafischen Bedienoberfläche des Bedienhandgeräts von einem Menüpunkt zu einem anderen Menüpunkt gewechselt werden. Im Sinne eines "enter"-Befehls oder "execute"-Befehls kann ein ausgewählter Menüpunkt beispielsweise zu seiner Ausführung aktiviert werden. Dies kann beispielsweise über ein weiteres zweites Eingabemittel im Sinne der Erfindung erfolgen.

Die erste Steuereinrichtung kann programmtechnisch eingerichtet sein, dem wenigstens einen zweiten Eingabemittel eine bestimmte Funktion aus einer Menge an mehreren verschiedenen möglichen Funktionen zuzuordnen. Eine solche konfigurierbare Zuordnung kann dadurch erfolgen, dass eine gewünschte Funktion, die zuvor manuell oder programmgesteuert ausgewährt bzw. eingestellt oder konfiguriert wurde, automatisch ausgewählt bzw. initialisiert wird.

Insoweit kann die Zuordnung einer bestimmten nicht sicherheitsrelevanten Funktionsart zu einem bestimmten zweiten Eingabemittel konfigurierbar sein. So kann ein Benutzer des Bediengeräts, wie beispielsweise ein Roboterprogrammierer, selbst das gewünschte Verhalten der zweiten Eingabemittel nach einem Aktivieren des Not-Halt-Schaltmittels bestimmen. Alternativ kann das Verhalten der zweiten Eingabemittel nach einem Aktivieren des Not-Halt-Schaltmittels beispielsweise werksseitig fest vorgegeben sein oder nach Kundenwunsch in die Steuereinrichtung implementiert werden.

Das wenigstens eine zweite Eingabemittel kann somit an einem von der Maschine oder der Anlage separaten Bedienhandgerät ausgebildet sein, welches auch das Not-Halt-Schaltmittel aufweist, welches in seinem funktionsfähigen Betriebszustand steuerungstechnisch an die Maschine oder die Anlage angeschlossen ist, um im angeschlossenen Zustand die Maschine oder die Anlage in einen sicheren Zustand zu bringen, wenn das Not-Halt-Schaltmittel seinen aktivierten Funktionszustand aufweist, wobei im aktivierten Funktionszustand des Not-Halt-Schaltmittels dem wenigstens einen zweiten Eingabemittel die vorbestimmte Funktion zugeordnet ist bzw. unmittelbar zugeordnet wird, so dass bei einem manuellen Betätigen des zweiten Eingabemittels nach Aktivierung des Not-Halt-Schaltmittels die zugeordnete Funktion durch die erste Steuereinrichtung auslösbar ist.

Im aktivierten Funktionszustand des Not-Halt-Schaltmittels wird die Maschine oder Anlage sofort stillgesetzt d.h. angehalten und gegen Wiederanlaufen gesichert, wie es auch die einschlägigen Normen vorschreiben.

Das wenigstens eine zweite Eingabemittel kann ein Zustimmtaster des Bedienhandgeräts sein.

Die erste Steuereinrichtung kann dabei ausgebildet und eingerichtet sein, im aktivierten Funktionszustand der zweiten Steuereinrichtung, insbesondere des Not-Halt-Schaltmittels, dem wenigstens einen Zustimmtaster eine vorbestimmte erste Funktion zuzuordnen, so dass bei einem einfachen Drücken des Zustimmtasters diese zugeordnete erste Funktion ausgelöst wird, und demselben Zustimmtaster eine vorbestimmte zweite Funktion zuzuordnen, die sich von der ersten Funktion unterscheidet, so dass bei einem Durchdrücken des Zustimmtasters die zugeordnete zweite Funktion ausgelöst wird.

Wie bereits weiter oben erwähnt, kann beispielsweise vorgesehen sein, dass die erste Steuereinrichtung derart eingerichtet ist, dass durch manuelles Drücken des Zustimmtasters ein Cursor in den Zeilen des Roboterprogramms oder eine Markierung, die durch grafisches, insbesondere farbliches Hervorheben einer Zeile des Roboterprogramms gebildet wird, in die nächsthöhere Programmzeile springt. Es kann des Weiteren beispielsweise vorgesehen sein, dass die erste Steuereinrichtung zusätzlich derart eingerichtet ist, dass durch manuelles Durchdrücken des Zustimmtasters der Cursor oder die Markierung in den Zeilen des Roboterprogramms in die nächstniedrigere Programmzeile springt. Dies ist dann eine für den Zustimmtaster zusätzliche zweite neue Funktionalität, welche keine sicherheitsrelevante Funktion ist, also nicht in sicherer Technik ausgestaltet sein muss. Soll eine angewählte oder markierte Programmzeile wahlweise ausgeführt werden, editiert oder gespeichert werden, kann dies beispielsweise durch Drücken oder Durchdrücken einer zweiten vorhandenen Zustimmtaste erfolgen, die entsprechend mit dieser nicht sicherheitsrelevanten, neuen Funktion durch die erste Steuereinrichtung belegt worden ist.

Das Bedienhandgerät kann demgemäß einen ersten Zustimmtaster und wenigstens einen weiteren Zustimmtaster aufweisen und die erste Steuereinrichtung kann dabei ausgebildet und eingerichtet sein, im aktivierten Funktionszustand der zweiten Steuereinrichtung, insbesondere des Not-Halt-Schaltmittels, dem ersten Zustimmtaster eine vorbestimmte erste Funktion zuzuordnen, so dass bei einem einfachen Drücken des Zustimmtasters diese zugeordnete erste Funktion ausgelöst wird, und/oder demselben Zustimmtaster eine vorbestimmte zweite Funktion zuzuordnen, die sich von der ersten Funktion unterscheidet, so dass bei einem Durchdrücken des Zustimmtasters die zugeordnete zweite Funktion ausgelöst wird, und die erste Steuereinrichtung ausgebildet und eingerichtet ist, im aktivierten Funktionszustand der zweiten Steuereinrichtung, insbesondere des Not-Halt-Schaltmittels, dem weiteren Zustimmtaster eine vorbestimmte weitere Funktion zuzuordnen, die sich von der ersten Funktion und der zweiten Funktion des ersten Zustimmtasters unterscheidet, so dass bei einem einfachen Drücken des weiteren Zustimmtasters und/oder einem Durchdrücken des weiteren Zustimmtasters diese zugeordnete weitere Funktion ausgelöst wird.

Alternativ oder ergänzend zu einer Neubelegung der Funktion eines Zustimmtasters oder mehrerer Zustimmtaster, kann das wenigstens eine zweite Eingabemittel ein Betriebsarten-Wahlschalter des Bedienhandgeräts sein und die erste Steuereinrichtung kann dabei ausgebildet und eingerichtet sein, im aktivierten Funktionszustand der zweiten Steuereinrichtung, insbesondere des Not-Halt-Schaltmittels, dem wenigstens einen Betriebsarten-Wahlschalter eine vorbestimmte Funktion zuzuordnen, so dass bei einem manuellen Umschalten des Betriebsarten-Wahlschalters diese zugeordnete Funktion ausgelöst wird.

Eine beispielhaft zugeordnete neue Funktionalität für einen solchen Betriebsarten-Wahlschalter kann dergestalt sein, dass über die Schaltstellung des Betriebsarten-Wahlschalters eine Selektionsrichtung bestimmt werden kann. So kann einer ersten Schaltstellung des Betriebsarten-Wahlschalters die Funktionalität "nach oben bewegen" zugeordnet sein und einer zweiten Schaltstellung des Betriebsarten-Wahlschalters die Funktionalität "nach unten bewegen" zugeordnet sein. Diese Bewegungsrichtungen geben dann vor, wie sich ein Cursor oder eine Markierung auf einem grafischen Display verhält, wenn beispielsweise der Zustimmtaster gedrückt wird, um die Sprungfunktionalität auszulösen und zwar in Abhängigkeit der Schaltstellung des Betriebsarten-Wahlschalters wahlweise im Sinne eines Cursor-Sprunges nach oben, gemäß der ersten Schaltstellung des Betriebsarten-Wahlschalters, oder im Sinne eines Cursor-Sprunges nach unten, gemäß der zweiten Schaltstellung des Betriebsarten-Wahlschalters.

Das wenigstens eine zweite Eingabemittel kann gegebenenfalls auch der Not-Halt-Taster des Bedienhandgeräts selbst sein, wobei die erste Steuereinrichtung dabei ausgebildet und eingerichtet sein kann, im aktivierten Funktionszustand des Not-Halt-Schaltmittels, dem Not-Halt-Schaltmittel eine vorbestimmte Funktion zuzuordnen, so dass bei einem Betätigen des Not-Halt-Schaltmittels diese zugeordnete Funktion ausgelöst wird.

Unabhängig der Art des zweiten Eingabemittels kann eine zusätzliche neue Funktionalität dadurch konfiguriert werden, dass eine Anzahl von mehreren manuellen Betätigungen pro vorgegebener Zeiteinheit eine bestimmte Funktionalität auslöst. Dies kann beispielsweise im Sinne eines sogenannten "Doppelklicks" realisiert sein.

Die Maschine kann, wie bereits zu beispielshaften Ausführungen erwähnt, ein Roboter sein, und/oder die Anlage kann mehrere Roboter umfassen, wobei wenigstens einer der Roboter durch das Bedienhandgerät ansteuerbar ist.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine beispielhafte Maschine in der konkreten Bauart eines Industrieroboters, der eine Steuervorrichtung aufweist, an welche ein erstes Bedienhandgerät drahtgebunden angeschlossen ist und ein zweites Bedienhandgerät in einer drahtlosen Verbindung zur Steuervorrichtung steht,
- Fig. 2: eine schematische Darstellung einer beispielhaften erfindungsgemäßen Steuervorrichtung in einem allgemeinen Aufbau,
- Fig. 3: eine schematische Darstellung der ersten Steuereinrichtung, die programmtechnisch eingerichtet ist, dem wenigstens einen zweiten Eingabemittel eine bestimmte Funktion aus einer Menge an mehreren verschiedenen möglichen Funktionen zuzuordnen,
- Fig. 4: eine Symboldarstellung eines elektrischen Schaltbildes eines beispielshaften dreistufigen Zustimmtasters mit Arbeitskontakten und Hilfskontakten, und
- Fig. 5: eine perspektivische Darstellung des drahtgebundenen ersten Bedienhandgeräts gemäß Fig.1 in einer Ansicht von unten mit einem ersten Zustimmtaster und einem weiteren Zustimmtaster.

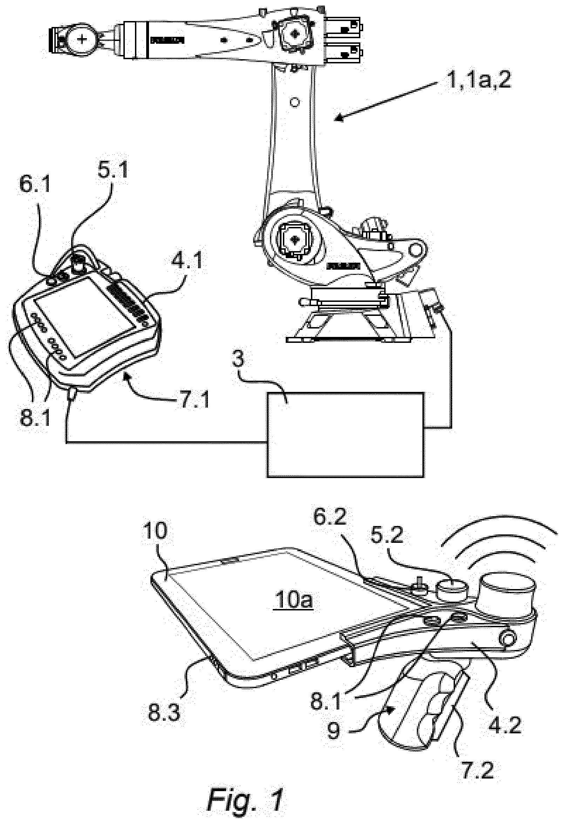

In der Fig. 1 ist ein Roboter 1a als ein konkretes Ausführungsbeispiel einer Maschine 1 oder einer Komponente einer Anlage 2 dargestellt. Der Roboter 1a umfasst eine Steuervorrichtung 3, welche ausgebildet und eingerichtet ist, den Roboter 1a anzusteuern und insbesondere bei Auslösen eines Not-Halts automatisch in einen sicheren Zustand zu bringen, insbesondere stillzusetzen bzw. anzuhalten, d.h. zu stoppen. An die Steuervorrichtung 3 ist im Falle des vorliegenden Ausführungsbeispiels drahtgebunden ein erstes Bedienhandgerät 4.1 angeschlossen. Das erste Bedienhandgerät 4.1 ist mit einem ersten elektrischen Not-Halt-Schaltmittel 5.1, einem ersten Betriebsarten-Wahlschalter 6.1 und mehreren Zustimmtastern 7.1 ausgestattet. Das erste Bedienhandgerät 4.1 umfasst außerdem mehrere erste Eingabemittel 8.1, welche zum Auslösen von nicht sicherheitsrelevanten Funktionen konfiguriert sind.

Die Maschine 1 kann demgemäß ein Roboter 1a, insbesondere ein Roboter 1a aus einer Anzahl von mehreren Robotern einer Anlage 2 sein, wobei wenigstens einer der Roboter 1a durch das Bedienhandgerät 4.1 und/oder 4.2 ansteuerbar ist.

An die Steuervorrichtung 3 ist im Falle des vorliegenden Ausführungsbeispiels außerdem ein drahtloses, zweites Bedienhandgerät 4.2 angeschlossen. Das zweite Bedienhandgerät 4.2 ist mit einem zweiten elektrischen Not-Halt-Schaltmittel 5.2, einem zweiten Betriebsarten-Wahlschalter 6.2 und mehreren Zustimmtastern 7.2 ausgestattet. Sowohl das zweite Not-Halt-Schaltmittel 5.2, der zweite Betriebsarten-Wahlschalter 6.2, als auch die mehreren Zustimmtastern 7.2 bilden jeweils ein zweites Eingabemittel 8.2 des Bedienhandgeräts 4.2. Das zweite Bedienhandgerät 4.2 umfasst gegebenenfalls auch mehrere erste Eingabemittel 8.1, welche zum Auslösen von nicht sicherheitsrelevanten Funktionen konfiguriert sind. Das zweite Bedienhandgerät 4.2 ist eine spezielle Ausführung, die zweiteilig ausgebildet ist und eine in sicherer Technik ausgebildete Sicherheits-Grundsteuervorrichtung 9 umfasst, an welche ein handelsüblicher Tablet-Computer 10 angesteckt ist, der in nicht sicherer Technik ausgebildet ist. Der Tablet-Computer 10 kann zusätzlich elektro-mechanische Eingabemittel 8.3 und/oder auf einem Touchscreen 10a des Tablet-Computers 10 dargestellte Software-Eingabemittel (sogenannte Touch-Keys) aufweisen.

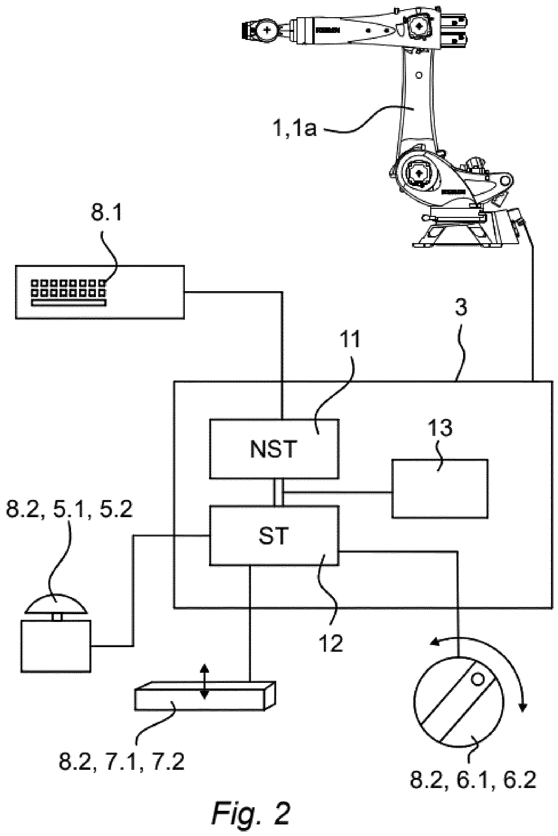

Demgemäß kann das wenigstens eine zweite Eingabemittel 8.2 an einem von der Maschine 1 oder der Anlage 2 separaten Bedienhandgerät 4.1, 4.2 ausgebildet sein, welches auch das Not-Halt-Schaltmittel 5.1, 5.2 aufweist, welches in seinem funktionsfähigen Betriebszustand steuerungstechnisch an die Maschine 1 oder die Anlage 2 angeschlossen ist, um im angeschlossenen Zustand die Maschine 1 oder die Anlage 2 in einen sicheren Zustand zu bringen, wenn das Not-Halt-Schaltmittel 5.1, 5.2 seinen aktivierten Funktionszustand aufweist, und im aktivierten Funktionszustand des Not-Halt-Schaltmittels 5.1, 5.2 dem wenigstens einen zweiten Eingabemittel 8.2 die vorbestimmte Funktion zugeordnet ist, so dass bei manuellem Betätigen des zweiten Eingabemittels 8.2 die zugeordnete Funktion durch die erste Steuereinrichtung 11 auslösbar ist, welche in Fig.2 gezeigt ist.

Die Fig. 2 zeigt die Steuervorrichtung 3 zum Steuern der Maschine 1 oder Anlage 2. Im dargestellten Ausführungsbeispiel umfasst die Steuervorrichtung 3:
- eine erste Steuereinrichtung 11, welche in nicht sicherer Technik (NST) ausgebildet ist und eingerichtet ist zum Ansteuern wenigstens einer nicht sicherheitsrelevanten Funktion der Maschine 1 oder Anlage 2, wobei die erste Steuereinrichtung 11 mit wenigstens einem ersten Eingabemittel 8.1 verbunden ist, das ausgebildet ist zum manuellen Betätigen, um die nicht sicherheitsrelevante Funktion auszulösen,
- eine zweite Steuereinrichtung 12, welche in sicherer Technik (ST) ausgebildet ist und eingerichtet ist zum Ansteuern wenigstens einer sicherheitsrelevanten Funktion der Maschine 1 oder Anlage 2, wobei die zweite Steuereinrichtung 12 mit wenigstens einem zweiten Eingabemittel 8.2 in sicherer Technik verbunden ist, das ausgebildet ist zum manuellen Betätigen, um die sicherheitsrelevante Funktion auszulösen, wobei das wenigstens eine zweite Eingabemittel 8.2 zumindest ein Not-Halt-Schaltmittel 5.1, 5.2 umfasst, gekennzeichnet durch
- eine Überwachungseinrichtung 13, die ausgebildet und eingerichtet ist, das Not-Halt-Schaltmittel 5.1, 5.2 auf seinen Funktionszustand zu überwachen, derart, dass die Überwachungseinrichtung 13 in einem aktivierten Funktionszustand des Not-Halt-Schaltmittels 5.1, 5.2, durch den die Maschine 1 oder Anlage 2 in einen sicheren Zustand überführt wird, das wenigstens eine zweite Eingabemittel 8.2 mit der ersten Steuereinrichtung 11 verbindet, derart, dass durch manuelles Betätigen des zweiten Eingabemittels 8.2 nicht sicherheitsrelevante Funktionen der Maschine 1 oder Anlage 2 ausgelöst werden können, solange das Not-Halt-Schaltmittel 5.1, 5.2 sich in seinem nicht-funktionsfähigen Betriebszustand befindet, in dem es nicht als bestimmungsgemäßes Sicherheitsschaltmittel an eine Maschine 1 oder Anlage 2 angeschlossen ist.

Die Überwachungseinrichtung 13 ist im Falle des vorliegenden Ausführungsbeispiels eingerichtet, ein Signal an die erste Steuereinrichtung 11 zu senden, wenn das Not-Halt-Schaltmittel 5.1, 5.2 sich in seinem aktivierten Funktionszustand befindet und die erste Steuereinrichtung 11 aufgrund des von der Überwachungseinrichtung 13 erhaltenen Signals dem wenigstens einen zweiten Eingabemittel 8.2 eine vorbestimmte Funktion zuordnet, derart, dass bei manuellem Betätigen des wenigstens einen zweiten Eingabemittels 8.2 die zugeordnete Funktion ausgeführt wird.

Das wenigstens eine zweite Eingabemittel kann somit auch der Betriebsarten-Wahlschalter 6.1, 6.2 des Bedienhandgeräts 4.1, 4.2 sein, wobei die erste Steuereinrichtung 11 ausgebildet und eingerichtet ist, im aktivierten Funktionszustand des Not-Halt-Schaltmittels 5.1, 5.2, dem wenigstens einen Betriebsarten-Wahlschalter 6.1, 6.2 eine vorbestimmte Funktion zuzuordnen, so dass bei einem manuellen Umschalten des Betriebsarten-Wahlschalters 6.1, 6.2 diese zugeordnete Funktion ausgelöst wird.

Alternativ oder ergänzend kann das wenigstens eine zweite Eingabemittel 8.2 gegebenenfalls sogar der Not-Halt-Taster 5.1, 5.2 des Bedienhandgeräts 4.1,4.2 selbst sein, wobei die erste Steuereinrichtung 11 ausgebildet und eingerichtet ist, im aktivierten Funktionszustand des Not-Halt-Schaltmittels 5.1, 5.2, dem Not-Halt-Schaltmittel 5.1, 5.2 oder einem anderen Not-Halt-Schaltmittel 5.1, 5.2 eines anderen Bedienhandgeräts 4.1,4.2 eine vorbestimmte Funktion zuzuordnen, so dass bei einem Betätigen dieses Not-Halt-Schaltmittels 5.1, 5.2 die zugeordnete Funktion ausgelöst wird.

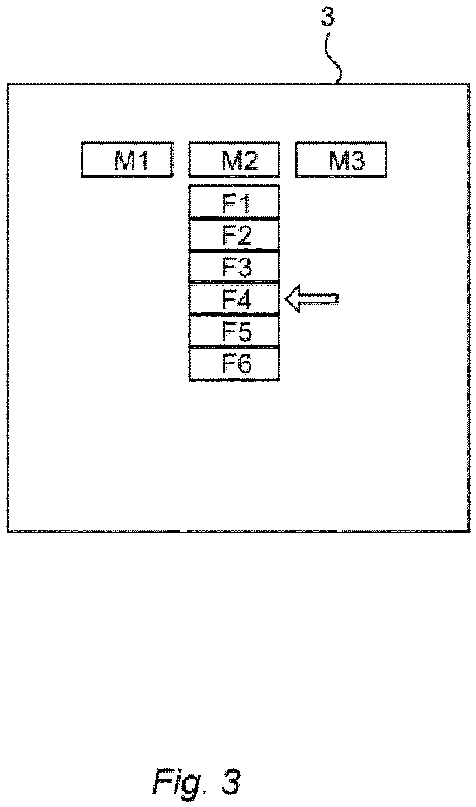

Wie in Fig. 3 schematisch aufgezeigt ist, kann die erste Steuereinrichtung 11 dabei programmtechnisch eingerichtet sein, dem wenigstens einen zweiten Eingabemittel 8.2 eine bestimmte Funktion (F4) aus einer Menge an mehreren verschiedenen möglichen Funktionen (F1 bis F6) zuzuordnen, wenn die bestimmte Funktion (F4) manuell oder programmgesteuert automatisch ausgewählt wurde.

Die erste Steuereinrichtung 11 kann ausgebildet und eingerichtet sein, im aktivierten Funktionszustand des Not-Halt-Schaltmittels 5.1, 5.2, dem wenigstens einen Zustimmtaster 7.1, 7.2 eine vorbestimmte erste Funktion zuzuordnen, so dass bei einem einfachen Drücken des Zustimmtasters 7.1, 7.2 diese zugeordnete erste Funktion ausgelöst wird, und demselben Zustimmtaster 7.1, 7.2 eine vorbestimmte zweite Funktion zuzuordnen, die sich von der ersten Funktion unterscheidet, so dass bei einem Durchdrücken des Zustimmtasters 7.1, 7.2 die zugeordnete zweite Funktion ausgelöst wird.

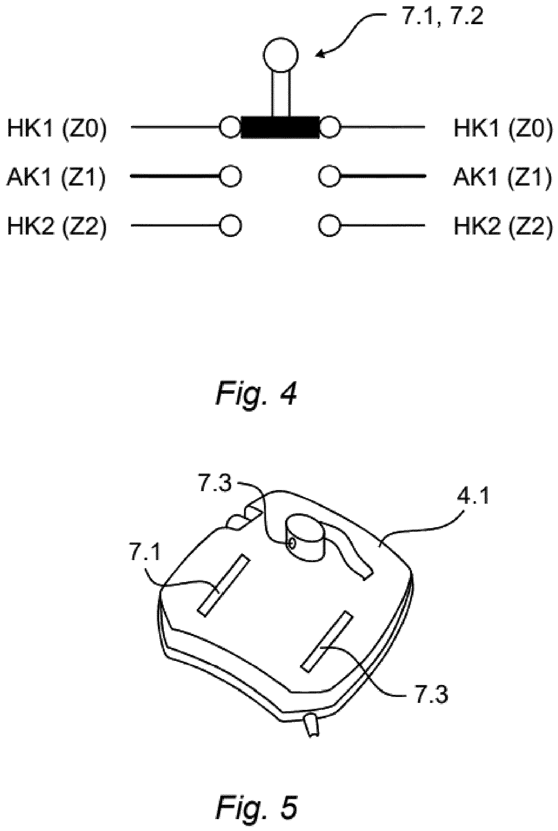

Zur Erreichung dieser Funktionalität kann der Umstand genutzt werden, dass dreistufige Zustimmtaster 7.1, 7.2 in üblichen Bauformen neben ihren elektrischen Arbeitskontakten AK1, welche so geschaltet sind, dass sie im gedrückten Zustand Z1 geschlossen sind und sowohl im nicht gedrückten Zustand Z0, als auch im durchgedrückten Zustand Z2 geöffnet sind, außerdem Hilfskontakte HK1, HK2 aufweisen, welche aufgrund ihrer individuellen Schaltkonfigurationen eine elektrische Abfrage erlauben, welche es ermöglich feststellen zu können, ob sich der Zustimmtaster 7.1, 7.2 in seinem nicht gedrückten Zustand Z0 befindet oder sich in seinem durchgedrückten Zustand Z2 befindet. Dies ist schematisch in Fig. 4 aufgezeigt.

Das Bedienhandgerät 4.1, 4.2 kann einen ersten Zustimmtaster 7.1 und wenigstens einen weiteren Zustimmtaster 7.3 aufweisen, wie dies insbesondere in Fig. 5 aufgezeigt ist, wobei die erste Steuereinrichtung 11 ausgebildet und eingerichtet ist, im aktivierten Funktionszustand des Not-Halt-Schaltmittels 5.1, 5.2, dem ersten Zustimmtaster 7.1 eine vorbestimmte erste Funktion zuzuordnen, so dass bei einem einfachen Drücken des ersten Zustimmtasters 7.1 diese zugeordnete erste Funktion ausgelöst wird, und/oder demselben Zustimmtaster 7.1 eine vorbestimmte zweite Funktion zuzuordnen, die sich von der ersten Funktion unterscheidet, so dass bei einem Durchdrücken des ersten Zustimmtasters 7.1 die zugeordnete zweite Funktion ausgelöst wird, und die erste Steuereinrichtung 11 ausgebildet und eingerichtet ist, im aktivierten Funktionszustand des Not-Halt-Schaltmittels 5.1, 5.2, dem weiteren Zustimmtaster 7.3 eine vorbestimmte weitere Funktion zuzuordnen, die sich von der ersten Funktion und der zweiten Funktion des ersten Zustimmtasters 7.1 unterscheidet, so dass bei einem einfachen Drücken des weiteren Zustimmtasters 7.3 und/oder einem Durchdrücken des weiteren Zustimmtasters 7.3 diese zugeordnete weitere Funktion ausgelöst wird.

## Patentansprüche

1. Steuervorrichtung zum Steuern einer Maschine (1) oder Anlage (2), aufweisend:
- eine erste Steuereinrichtung (11), welche in nicht sicherer Technik ausgebildet ist und eingerichtet ist zum Ansteuern wenigstens einer nicht sicherheitsrelevanten Funktion der Maschine (1) oder Anlage (2),
- eine zweite Steuereinrichtung (12), welche in sicherer Technik ausgebildet ist und eingerichtet ist zum Ansteuern wenigstens einer sicherheitsrelevanten Funktion der Maschine (1) oder Anlage (2), wobei die zweite Steuereinrichtung (12) mit wenigstens einem der zweiten Steuereinrichtung (12) zugeordneten zweiten Eingabemittel (8.2) in sicherer Technik verbunden ist, das ausgebildet ist zum manuellen Betätigen, um die sicherheitsrelevante Funktion auszulösen, **gekennzeichnet durch**
- eine Überwachungseinrichtung (13), die ausgebildet und eingerichtet ist, die zweite Steuereinrichtung (12) auf ihren Funktionszustand zu überwachen, derart, dass die Überwachungseinrichtung (13) in einem aktivierten Funktionszustand der zweiten Steuereinrichtung (12) , durch den die Maschine (1) oder Anlage (2) in einen sicheren Zustand überführt wird, das wenigstens eine der zweiten Steuereinrichtung (12) zugeordnete zweite Eingabemittel (8.2) mit der ersten Steuereinrichtung (11) verbindet, derart, dass durch manuelles Betätigen des wenigstens einen zweiten Eingabemittels (8.2) nicht sicherheitsrelevante Funktionen der Maschine (1) oder Anlage (2) ausgelöst werden können, solange die zweite Steuereinrichtung (12) sich in ihrem aktivierten Funktionszustand befindet, in dem das wenigstens eine zweite Eingabemittel (8.2) nicht als bestimmungsgemäßes Sicherheitsschaltmittel an die Maschine (1) oder Anlage (2) angeschlossen ist.

2. Steuervorrichtung nach Anspruch 1, **dadurch gekennzeichnet, dass** die Überwachungseinrichtung (13) eingerichtet ist, ein Signal an die erste Steuereinrichtung (11) zu senden, wenn die zweite Steuereinrichtung (12), insbesondere das Not-Halt-Schaltmittel (5.1, 5.2) sich im aktivierten Funktionszustand befindet und die erste Steuereinrichtung (11) aufgrund des von der Überwachungseinrichtung (13) erhaltenen Signals dem wenigstens einen zweiten Eingabemittel (8.2) eine vorbestimmte Funktion zuordnet, derart, dass bei manuellem Betätigen des wenigstens einen zweiten Eingabemittels (8.2) die zugeordnete Funktion ausgeführt wird.

3. Steuervorrichtung nach Anspruch 2, **dadurch gekennzeichnet, dass** die erste Steuereinrichtung (11) programmtechnisch eingerichtet ist, dem wenigstens einen zweiten Eingabemittel (8.2) eine bestimmte Funktion aus einer Menge an mehreren verschiedenen möglichen Funktionen zuzuordnen.

4. Steuervorrichtung nach einem der Ansprüche 1 bis 3, **dadurch gekennzeichnet, dass** das wenigstens eine zweite Eingabemittel (8.2) an einem von der Maschine (1) oder der Anlage (2) separaten Bedienhandgerät (4.1, 4.2) ausgebildet ist, welches auch das Not-Halt-Schaltmittel (5.1, 5.2) aufweist, welches in seinem funktionsfähigen Betriebszustand steuerungstechnisch an die Maschine (1) oder die Anlage (2) angeschlossen ist, um im angeschlossenen Zustand die Maschine (1) oder die Anlage (2) in einen sicheren Zustand zu bringen, wenn das Not-Halt-Schaltmittel (5.1, 5.2) seinen aktivierten Funktionszustand aufweist, und im aktivierten Funktionszustand des Not-Halt-Schaltmittels (5.1, 5.2) dem wenigstens einen zweiten Eingabemittel (8.2) die vorbestimmte Funktion zugeordnet ist, so dass bei einem manuellen Betätigen des wenigstens einen zweiten Eingabemittels (8.2) nach Aktivierung des Not-Halt-Schaltmittels (5.1, 5.2) die zugeordnete Funktion durch die erste Steuereinrichtung (11) auslösbar ist.

5. Steuervorrichtung nach Anspruch 4, **dadurch gekennzeichnet, dass** das wenigstens eine zweite Eingabemittel (8.2) ein Zustimmtaster (7.1, 7.2) des Bedienhandgeräts (4.1, 4.2) ist.

6. Steuervorrichtung nach Anspruch 5, **dadurch gekennzeichnet, dass** die erste Steuereinrichtung (11) ausgebildet und eingerichtet ist, im aktivierten Funktionszustand der zweiten Steuereinrichtung (12), insbesondere des Not-Halt-Schaltmittels (5.1, 5.2), dem wenigstens einen Zustimmtaster (7.1, 7.2) eine vorbestimmte erste Funktion zuzuordnen, so dass bei einem einfachen Drücken des Zustimmtasters (7.1, 7.2) diese zugeordnete erste Funktion ausgelöst wird, und demselben Zustimmtaster (7.1, 7.2) eine vorbestimmte zweite Funktion zuzuordnen, die sich von der ersten Funktion unterscheidet, so dass bei einem Durchdrücken des Zustimmtasters (7.1, 7.2) die zugeordnete zweite Funktion ausgelöst wird.

7. Steuervorrichtung nach Anspruch 5 oder 6, **dadurch gekennzeichnet, dass** das Bedienhandgerät (4.1, 4.2) einen ersten Zustimmtaster (7.1, 7.2) und wenigstens einen weiteren Zustimmtaster (7.3) aufweist und die erste Steuereinrichtung (11) ausgebildet und eingerichtet ist, im aktivierten Funktionszustand der zweiten Steuereinrichtung (12), insbesondere des Not-Halt-Schaltmittels (5.1, 5.2), dem ersten Zustimmtaster (7.1, 7.2) eine vorbestimmte erste Funktion zuzuordnen, so dass bei einem einfachen Drücken des ersten Zustimmtasters (7.1, 7.2) diese zugeordnete erste Funktion ausgelöst wird, und/oder demselben Zustimmtaster (7.1, 7.2) eine vorbestimmte zweite Funktion zuzuordnen, die sich von der ersten Funktion unterscheidet, so dass bei einem Durchdrücken des ersten Zustimmtasters (7.1, 7.2) die zugeordnete zweite Funktion ausgelöst wird, und die erste Steuereinrichtung (11) ausgebildet und eingerichtet ist, im aktivierten Funktionszustand der zweiten Steuereinrichtung (12), insbesondere des Not-Halt-Schaltmittels (5.1, 5.2), dem weiteren Zustimmtaster (7.3) eine vorbestimmte weitere Funktion zuzuordnen, die sich von der ersten Funktion und der zweiten Funktion des ersten Zustimmtasters (7.1, 7.2) unterscheidet, so dass bei einem einfachen Drücken des weiteren Zustimmtasters (7.3) und/oder einem Durchdrücken des weiteren Zustimmtasters (7.3) diese zugeordnete weitere Funktion ausgelöst wird.

8. Steuervorrichtung nach Anspruch 4, **dadurch gekennzeichnet, dass** das wenigstens eine zweite Eingabemittel (8.2) ein Betriebsarten-Wahlschalter (6.1, 6.2) des Bedienhandgeräts ist und die erste Steuereinrichtung (11) ausgebildet und eingerichtet ist, im aktivierten Funktionszustand der zweiten Steuereinrichtung (12), insbesondere des Not-Halt-Schaltmittels (5.1, 5.2), dem wenigstens einen Betriebsarten-Wahlschalter (6.1, 6.2) eine vorbestimmte Funktion zuzuordnen, so dass bei einem manuellen Umschalten des Betriebsarten-Wahlschalters (6.1, 6.2) diese zugeordnete Funktion ausgelöst wird.

9. Steuervorrichtung nach Anspruch 4, **dadurch gekennzeichnet, dass** das wenigstens eine zweite Eingabemittel (8.2) der Not-Halt-Taster (5.1, 5.2) des Bedienhandgeräts (4.1, 4.2) selbst ist und die erste Steuereinrichtung (11) ausgebildet und eingerichtet ist, im aktivierten Funktionszustand des Not-Halt-Schaltmittels (5.1, 5.2), dem Not-Halt-Schaltmittel (5.1, 5.2) eine vorbestimmte Funktion zuzuordnen, so dass bei einem Betätigen des Not-Halt-Schaltmittels (5.1, 5.2) diese zugeordnete Funktion ausgelöst wird.

10. Steuervorrichtung nach einem der Ansprüche 4 bis 9, **dadurch gekennzeichnet, dass** die Maschine (1) ein Roboter (1a) ist und/oder die Anlage (2) mehrere Roboter (1a) umfasst, wobei wenigstens einer der Roboter (1a) durch das Bedienhandgerät (4.1, 4.2) ansteuerbar ist.

## Claims

1. Control apparatus for controlling a machine (1) or system (2), having:
- a first control device (11) which is designed in non-safety technology and is configured to control at least one non-safety-relevant function of the machine (1) or system (2),
- a second control device (12) which is designed in safety technology and is configured to control at least one safety-relevant function of the machine (1) or system (2), wherein the second control device (12) is connected in safety technology to at least one second input means (8.2) which is assigned to the second control device (12) and which is designed to be manually actuated in order to trigger the safety-relevant function, **characterized by**
- a monitoring device (13) which is designed and configured to monitor the second control device (12) for its functional state in such a way that the monitoring device (13), in an activated functional state of the second control device (12), by way of which the machine (1) or system (2) is transferred to a safe state, connects the at least one second input means (8.2) assigned to the second control device (12) to the first control device (11) in such a way that non-safety-relevant functions of the machine (1) or system (2) can be triggered by manually actuating the at least one second input means (8.2) so long as the second control device (12) is in its activated functional state in which the at least one second input means (8.2) is not connected to the machine (1) or system (2) as an intended safety switching means.

2. Control apparatus according to Claim 1, **characterized in that** the monitoring device (13) is configured to transmit a signal to the first control device (11) if the second control device (12), in particular the emergency stop switching means (5.1, 5.2), is in the activated functional state and, on account of the signal received from the monitoring device (13), the first control device (11) assigns a predetermined function to the at least one second input means (8.2) in such a way that when the at least one second input means (8.2) is manually actuated the assigned function is executed.

3. Control apparatus according to Claim 2, **characterized in that** the first control device (11) is programmatically configured to assign a particular function from a set of several different possible functions to the at least one second input means (8.2).

4. Control apparatus according to one of Claims 1 to 3, **characterized in that** the at least one second input means (8.2) is formed on a hand-held device (4.1, 4.2) which is separate from the machine (1) or the system (2) and which also has the emergency stop switching means (5.1, 5.2) which in its functional operating state is connected to the machine (1) or the system (2) for control purposes in order to, in the connected state, bring the machine (1) or the system (2) into a safe state when the emergency stop switching means (5.1, 5.2) has its activated functional state, and in the activated functional state of the emergency stop switching means (5.1, 5.2) the predetermined function is assigned to the at least one second input means (8.2) so that when the at least one second input means (8.2) is manually actuated after activation of the emergency stop switching means (5.1, 5.2) the assigned function is able to be triggered by the first control device (11).

5. Control apparatus according to Claim 4, **characterized in that** the at least one second input means (8.2) is an enabling button (7.1, 7.2) of the hand-held device (4.1, 4.2).

6. Control apparatus according to Claim 5, **characterized in that** the first control device (11) is designed and configured to, in the activated functional state of the second control device (12), in particular of the emergency stop switching means (5.1, 5.2), assign a predetermined first function to the at least one enabling button (7.1, 7.2) so that, when the enabling button (7.1, 7.2) is simply pressed, this assigned first function is triggered, and assign a predetermined second function to the same enabling button (7.1, 7.2), which second function differs from the first function, so that when the enabling button (7.1, 7.2) is pressed through, the assigned second function is triggered.

7. Control apparatus according to Claim 5 or 6, **characterized in that** the hand-held device (4.1, 4.2) has a first enabling button (7.1, 7.2) and at least one further enabling button (7.3) and the first control device (11) is designed and configured to, in the activated functional state of the second control device (12), in particular of the emergency stop switching means (5.1, 5.2), assign a predetermined first function to the first enabling button (7.1, 7.2) so that, when the first enabling button (7.1, 7.2) is simply pressed, this assigned first function is triggered, and/or assign a predetermined second function to the same enabling button (7.1, 7.2), which second function differs from the first function, so that when the first enabling button (7.1, 7.2) is pressed through, the assigned second function is triggered, and the first control device (11) is designed and configured to, in the activated functional state of the second control device (12), in particular of the emergency stop switching means (5.1, 5.2), assign a predetermined further function to the further enabling button (7.3), which further function differs from the first function and the second function of the first enabling button (7.1, 7.2), so that, when the further enabling button (7.3) is simply pressed and/or the further enabling button (7.3) is pressed through, this assigned further function is triggered.

8. Control apparatus according to Claim 4, **characterized in that** the at least one second input means (8.2) is an operating mode selector switch (6.1, 6.2) of the hand-held device and the first control device (11) is designed and configured to, in the activated functional state of the second control device (12), in particular of the emergency stop switching means (5.1, 5.2), assign a predetermined function to the at least one operating mode selector switch (6.1, 6.2) so that, when the operating mode selector switch (6.1, 6.2) is manually switched over, this assigned function is triggered.

9. Control apparatus according to Claim 4, **characterized in that** the at least one second input means (8.2) is the emergency stop button (5.1, 5.2) of the hand-held device (4.1, 4.2) itself and the first control device (11) is designed and configured to, in the activated functional state of the emergency stop switching means (5.1, 5.2), assign a predetermined function to the emergency stop switching means (5.1, 5.2) so that, when the emergency stop switching means (5.1, 5.2) is actuated, this assigned function is triggered.

10. Control apparatus according to one of Claims 4 to 9, **characterized in that** the machine (1) is a robot (1a) and/or the system (2) comprises a plurality of robots (1a), wherein at least one of the robots (1a) is able to be controlled by the hand-held device (4.1, 4.2).

## Revendications

1. Arrangement de commande destiné à commander une machine (1) ou une installation (2), comprenant :
- un premier dispositif de commande (11), qui est réalisé dans une technique non sûre et est conçu pour commander au moins une fonction de la machine (1) ou de l'installation (2) qui n'est pas importante pour la sécurité,
- un deuxième dispositif de commande (12), qui est réalisé dans une technique sûre et qui est conçu pour commander au moins une fonction de la machine (1) ou de l'installation (2) qui est importante pour la sécurité, le deuxième dispositif de commande (12) étant relié en technique sûre à au moins un deuxième moyen de saisie (8.2) associé au deuxième dispositif de commande (12), lequel est configuré pour être actionné manuellement afin de déclencher la fonction importante pour la sécurité, **caractérisé par**
- un dispositif de surveillance (13), qui est configuré et conçu pour surveiller l'état de fonctionnement du deuxième dispositif de commande (12), de telle sorte que le dispositif de surveillance (13), dans un état de fonctionnement activé du deuxième dispositif de commande (12), par lequel la machine (1) ou l'installation (2) est transférée dans un état sécurisé, relie l'au moins un deuxième moyen de saisie (8.2) associé au deuxième dispositif de commande (12) avec le premier dispositif de commande (11) de telle sorte que les fonctions de la machine (1) ou de l'installation (2) qui ne sont pas importantes pour la sécurité peuvent être déclenchées par l'actionnement manuel de l'au moins un deuxième moyen de saisie (8.2) tant que le deuxième dispositif de commande (12) se trouve dans son état de fonctionnement activé, dans lequel l'au moins un deuxième moyen de saisie (8.2) n'est pas raccordé à la machine (1) ou à l'installation (2) en tant que moyen de commutation de sécurité conforme à la destination.

2. Arrangement de commande selon la revendication 1, **caractérisé en ce que** le dispositif de surveillance (13) est conçu pour envoyer un signal au premier dispositif de commande (11) lorsque le deuxième dispositif de commande (12), en particulier le moyen de commutation d'arrêt d'urgence (5.1, 5.2), se trouve dans l'état de fonctionnement activé et le premier dispositif de commande (11), sur la base du signal reçu du dispositif de surveillance (13), attribue une fonction prédéterminée à l'au moins un deuxième moyen de saisie (8.2), de telle sorte que, lors de l'actionnement manuel de l'au moins un deuxième moyen de saisie (8.2), la fonction attribuée est exécutée.

3. Arrangement de commande selon la revendication 2, **caractérisé en ce que** le premier dispositif de commande (11) est conçu par programmation pour attribuer à l'au moins un deuxième moyen de saisie (8.2) une fonction déterminée parmi une pluralité de plusieurs fonctions différentes possibles.

4. Arrangement de commande selon l'une des revendications 1 à 3, **caractérisé en ce que** l'au moins un deuxième moyen de saisie (8.2) est réalisé sur un appareil portatif de conduite (4.1, 4.2) séparé de la machine (1) ou de l'installation (2), lequel possède également le moyen de commutation d'arrêt d'urgence (5.1, 5.2), lequel, dans son état opérationnel apte au fonctionnement, est raccordé à la machine (1) ou à l'installation (2) par technique de commande afin de, dans l'état raccordé, amener la machine (1) ou l'installation (2) dans un état sûr lorsque le moyen de commutation d'arrêt d'urgence (5.1, 5.2) présente son état fonctionnel activé et, dans l'état fonctionnel activé du moyen de commutation d'arrêt d'urgence (5.1, 5.2), la fonction prédéterminée est associée à l'au moins un deuxième moyen de saisie (8.2), de sorte que lors d'un actionnement manuel de l'au moins un deuxième moyen de saisie (8.2) après l'activation du moyen de commutation d'arrêt d'urgence (5.1, 5.2), la fonction associée peut être déclenchée par le premier dispositif de commande (11).

5. Arrangement de commande selon la revendication 4, **caractérisé en ce que** l'au moins un deuxième moyen de saisie (8.2) est une touche d'assentiment (7.1, 7.2) de l'appareil portatif de conduite (4.1, 4.2).

6. Arrangement de commande selon la revendication 5, **caractérisé en ce que** le premier dispositif de commande (11) est configuré et conçu pour, dans l'état de fonctionnement activé du deuxième dispositif de commande (12), en particulier du moyen de commutation d'arrêt d'urgence (5.1, 5.2), attribuer à l'au moins une touche d'assentiment (7.1, 7.2) une première fonction prédéterminée, de telle sorte qu'une simple pression sur la touche d'assentiment (7.1, 7.2), cette première fonction attribuée est déclenchée, et attribuer à la même touche d'assentiment (7.1, 7.2) une deuxième fonction prédéterminée, qui diffère de la première fonction, de telle sorte que lorsque la touche d'assentiment (7.1, 7.2) est entièrement enfoncée, la deuxième fonction attribuée est déclenchée.

7. Arrangement de commande selon la revendication 5 ou 6, **caractérisé en ce que** l'appareil portatif de conduite (4.1, 4.2) possède une première touche d'assentiment (7.1, 7.2) et au moins une touche d'assentiment supplémentaire (7.3) et le premier dispositif de commande (11) est configuré et conçu pour, dans l'état de fonctionnement activé du deuxième dispositif de commande (12), en particulier du moyen de commutation d'arrêt d'urgence (5.1, 5.2), attribuer à la première touche d'assentiment (7.1, 7.2) une première fonction prédéterminée, de telle sorte qu'une simple pression sur la première touche d'assentiment (7.1, 7.2), cette première fonction attribuée est déclenchée, et/ou attribuer à la même touche d'assentiment (7.1, 7.2) une deuxième fonction prédéterminée, qui diffère de la première fonction, de telle sorte que lorsque la première touche d'assentiment (7.1, 7.2) est entièrement enfoncée, la deuxième fonction attribuée est déclenchée, et le premier dispositif de commande (11) est configuré et conçu pour, dans l'état de fonctionnement activé du deuxième dispositif de commande (12), en particulier du moyen d'arrêt d'urgence (5.1, 5.2), d'attribuer à la touche d'assentiment supplémentaire (7.3) une fonction supplémentaire prédéterminée, qui diffère de la première fonction et de la deuxième fonction de la première touche d'assentiment (7.1, 7.2), de telle sorte qu'une simple pression la touche d'assentiment supplémentaire (7.3) et/ou lorsque la touche d'assentiment supplémentaire (7.3) est entièrement enfoncée, cette fonction supplémentaire attribuée est déclenchée.

8. Arrangement de commande selon la revendication 4, **caractérisé en ce que** l'au moins un deuxième moyen de saisie (8.2) est un sélecteur de mode de fonctionnement (6.1, 6.2) de l'appareil portatif de conduite et le premier dispositif de commande (11) est configuré et conçu pour, dans l'état de fonctionnement activé du deuxième dispositif de commande (12), en particulier du moyen de commutation d'arrêt d'urgence (5.1, 5.2), attribuer à l'au moins un sélecteur de mode de fonctionnement (6.1, 6.2) une fonction prédéterminée, de telle sorte que lors d'une permutation manuelle du sélecteur de mode de fonctionnement (6.1, 6.2), cette fonction attribuée est déclenchée.

9. Arrangement de commande selon la revendication 4, **caractérisé en ce que** l'au moins un deuxième moyen de saisie (8.2) est le bouton d'arrêt d'urgence (5.1, 5.2) de l'appareil portatif de conduite (4.1, 4.2) lui-même et le premier dispositif de commande (11) est configuré et conçu pour, dans l'état de fonctionnement activé du moyen de commutation d'arrêt d'urgence (5.1, 5.2), attribuer au moyen de commutation d'arrêt d'urgence (5.1, 5.2) une fonction prédéterminée, de telle sorte que lors d'un actionnement du moyen de commutation d'arrêt d'urgence (5.1, 5.2), cette fonction attribuée est déclenchée.

10. Arrangement de commande selon l'une des revendications 4 à 9, **caractérisé en ce que** la machine (1) est un robot (1a) et/ou l'installation (2) comprend plusieurs robots (1a), au moins l'un des robots (1a) pouvant être commandé par l'appareil portatif de conduite (4.1, 4.2).
